# EUROPÄISCHE PATENTSCHRIFT

(11) **EP 3 402 704 B1**
(45) Veröffentlichungstag und Bekanntmachung des Hinweises auf die Patenterteilung: **01.07.2020**
(21) Anmeldenummer: 16825739.2
(22) Anmeldetag: 21.12.2016
(51) Int. Cl.: B60T 13/66, B60T 17/22, B60T 7/12

(54) **BREMSDRUCKUMSCHALTUNG MIT ZEITKONTINUIERLICHER RAMPE FÜR SCHIENENFAHRZEUGE**
BRAKE PRESSURE SWITCHOVER WITH CONTINUOUS-TIME RAMP FOR RAIL VEHICLES
MODIFICATION DE LA PRESSION DE FREINAGE À RAMPE CONTINUE DANS LE TEMPS POUR VÉHICULES SUR RAILS

(30) Priorität: 11.01.2016 DE 102016100290
(43) Veröffentlichungstag der Anmeldung: 21.11.2018
(73) Patentinhaber: KNORR-BREMSE Systeme für Schienenfahrzeuge GmbH, 80809 München (DE)
(72) Erfinder: HERDEN, Marc-Oliver, 81377 München (DE)
(86) Internationale Anmeldenummer: PCT/EP2016/082167
(87) Internationale Veröffentlichungsnummer: WO 2017/121595

(56) Entgegenhaltungen:
- EP-A1- 1 167 142
- WO-A2-2006/044250
- CH-A- 150 152
- DE-B1- 2 708 273
- US-A- 5 020 862

## Beschreibung

Die vorliegende Erfindung betrifft eine Vorrichtung und ein Verfahren zur Steuerung einer Bremseinrichtung für Schienenfahrzeuge.

Bei modernen Schienenfahrzeugen werden häufig pneumatische Bremseinrichtungen verwendet, die durch elektronische Bremssteuereinrichtungen gesteuert werden. Insbesondere soll eine Notbremseinrichtung sicherstellen, dass ein minimaler Notbremssteuerdruck zur Betätigung von Bremsaktuatoren des pneumatischen Bremssystems zur Verfügung steht. Bei einer Notbremsung besteht allerdings eine erhöhte Gefahr, dass so stark gebremst wird, dass die ausgeübte Bremskraft nicht mehr über den Reibkontakt zwischen Rad und Schiene aufgenommen werden kann. Dies kann zu einem Blockieren der Räder führen. Darüber hinaus führt eine Notbremsung häufig zu ruckartigem Verhalten des Schienenfahrzeugs, wodurch insbesondere stehende Passagiere gefährdet werden können.

Zur Vermeidung des Blockierens wurde eine zweistufige Druckregelung vorgeschlagen, wobei der c-Druck für die Notbremsung geschwindigkeitsabhängig in zwei Stufen geregelt wird. Somit kann auch während einer Notbremsung ein Blockieren der Räder vermieden werden und eine ruckfreie Bremsung erfolgen.

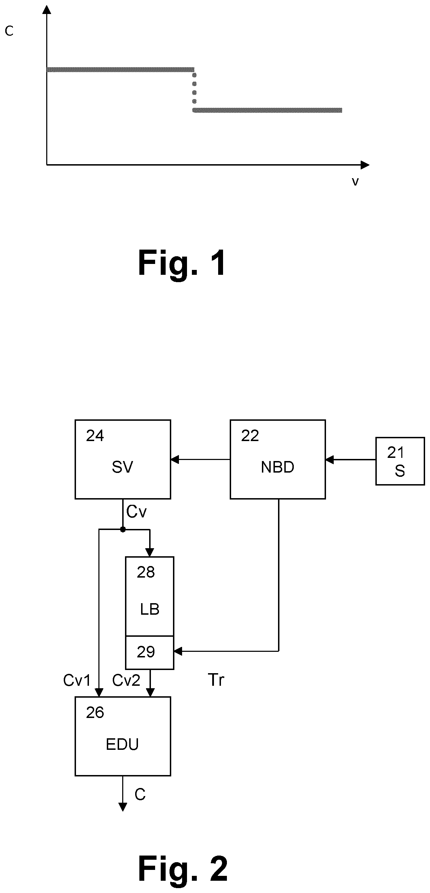

Fig. 1 zeigt ein Diagramm mit einem schematischen Verlauf einer solchen zweistufigen Regelung des Bremsdrucks (C) für eine pneumatische Bremseinrichtung in Abhängigkeit von der Geschwindigkeit (v) des Schienenfahrzeugs. Ab einer vorbestimmten Höhe der Geschwindigkeit wird der Bremsdruck (oder auch "c-Druck") für die Notbremsung bei herkömmlichen Notbremseinrichtungen geschwindigkeitsabhängig bspw. in zwei Stufen (hoch/niedrig) z.B. mit einem Druckübersetzer (EDU) geregelt. Dies kann bspw. so realisiert sein, dass ab einer festgelegten Geschwindigkeit des Schienenfahrzeugs eine zweite Druckkammer mit einem Vorsteuerdruck gefüllt wird, so dass der c-Druck dann sprungartig ansteigt. Dies führt jedoch zu Leistungsspitzen bei der Bremskraft, die einen hohen Verschleiß bei Reibungsbremsen verursachen. Solche Leistungsspitzen sollen vermieden werden.

Aus der DE 10 2011110 047 A1 ist eine Notbremseinrichtung für ein Schienenfahrzeug bekannt, mit einer Notbremssteuerventileinrichtung zur Bereitstellung eines Notbremssteuerdrucks für eine pneumatische Bremseinrichtung des Schienenfahrzeugs. Die Notbremseinrichtung umfasst eine Notbremsdruckeinstelleinrichtung zur Einstellung des Notbremssteuerdrucks in Abhängigkeit eines Lastwerts des Schienenfahrzeugs oder eines Geschwindigkeitswerts des Schienenfahrzeugs. Dabei kann die Umschaltung auch innerhalb eines geschwindigkeitsabhängigen Umschaltungsbereichs in mehreren geschwindigkeitsabhängigen Stufen erfolgen oder kontinuierlich geregelt sein, so dass die vorgenannten Leistungsspitzen verringert oder vermieden werden können.

Die CH 150 152 A zeigt eine Zugsicherungseinrichtung zur selbsttätigen Bremsung mit pneumatischen Bremsen versehener Fahrzeuge. Die Bremsung wird dabei stufenweise durchgeführt.

Die EP 1167 142 A1 zeigt ein Verfahren zur Geschwindigkeitssteuerung von Eisenbahngüterfahrzeugen. Dabei wird im Wesentlichen eine Zielbeschleunigung berechnet, aus der ein erforderlicher Bremszylinderdruck abgeleitet wird, um eine tatsächliche Geschwindigkeit eines Zuges einer Zielgeschwindigkeit in einer akzeptabel kurzen Zeit anzugleichen.

Die US 5 020 862 A zeigt ein Zwangsbremssteuersystem für eine Eisenbahnlokomotive, bei dem ein erster Druckschalter das Entlüften der Steuerkammer eines Zwangsbremsungsbeaufschlagungsventils steuert. Die Rückstellung des Zwangsbremsungsbeaufschlagungsventils, die der Betätigung in Reaktion auf einen unsicheren Betriebszustand folgt, wird durch Betätigen dieses ersten Druckschalters erreicht, um das Schließen des Steuerkammerentlüftungswegs zu bewirken.

Die DE 27 08 273 B1 zeigt eine Überwacheinrichtung für Druckluftbremsen von Schienenfahrzeugen mit zumindest einem einen über einen Führerbremshebel willkürlich verstellbaren Druckreglerteil und ein von dessen Ausgangsdruck steuerbares Relaisventil aufweisenden Führerbremsventil zur Steuerung des Druckes in einer Hauptluftleitung, und mit einem im Gefahrfall, insbesondere bei Überschreiten einer zulässigen Höchstgeschwindigkeit, einen Stromkreis unterbrechenden Sicherheitsschalter, wobei die Stromkreisunterbrechung während einer vorgegebenen Warnzeit ein Warnsignal und nach Ablauf der Warnzeit und fehlendem Einleiten einer Bremsung eine Zwangsbremsung auslöst, welche erst nach Ablauf einer bestimmten, vorgegebenen Zeitspanne wieder lösbar ist.

Die WO 2006 / 044 250 A2 zeigt schließlich ein Verfahren und ein System zum Bereitstellen einer fehlersicheren Steuerung eines elektronischen Bremssystems durch ein Zugsteuersystem, das einen Schalter steuert, der dem elektronischen Bremssystem Strom zuführt. Dabei erfolgt eine Aktivierung der Bremsen des Zuges dann, wenn der Schalter die Stromversorgung unterbricht.

Das Erfordernis der modifizierten Notbremsdruckeinstelleinrichtung oder zusätzlicher Elektronik führt jedoch zu einem erhöhten technischen Aufwand und einem damit verbundenen hohen Nachrüstaufwand bei der Modifikation herkömmlicher Systeme.

Der vorliegenden Erfindung liegt daher die Aufgabe zugrunde, eine Vorrichtung und ein Verfahren zur Steuerung einer Notbremseinrichtung für Schienenfahrzeuge bereitzustellen, durch die der mit der Vermeidung des Blockierens der Räder verbundene höhere Verschleiß der Reibungsbremsen auf technisch einfache Weise verringert werden kann.

Diese Aufgabe wird durch die Merkmale der Vorrichtung und des Verfahrens gemäß den unabhängigen Ansprüchen gelöst.

Weitere vorteilhafte Ausgestaltungen und Weiterbildungen der Erfindung ergeben sich aus den abhängigen Ansprüchen.

Erfindungsgemäß weist die Steuervorrichtung also einen Luftbehälter auf, der mit dem Bremssteuerdruck für den Druckumsetzer befüllt werden kann, wobei der Bremssteuerdruck dem Druckumsetzer aus dem Luftbehälter mittels einer Öffnungseinrichtung im Ansprechen auf das Triggersignal zugeführt wird. Der Druckanstieg erfolgt somit aufgrund des zwischengeschalteten Luftbehälters nicht sprungartig, sondern zeitkontinuierlich, bspw. in Form einer Rampe. Dadurch werden Leistungsspitzen reduziert und der Verschleiß der Reibungsbremsen gesenkt. Der Startpunkt der Umschaltung erfolgt dabei parameterabhängig (z.B. in Abhängigkeit von der Zuggeschwindigkeit).

Da das Triggersignal zur Druckumschaltung bereits bei herkömmlichen zweistufigen Bremsdruckregelungen verwendet wird, ist eine einfache und mit geringem technischem Aufwand verbundene Modifikation herkömmlicher Bremssysteme durch bloßes Zwischenschalten des Luftbehälters mit gesteuerter Öffnungseinrichtung möglich.

Gemäß einer ersten vorteilhaften Weiterbildung kann der Druckumsetzer einen ersten Druckteller und einen zweiten Druckteller aufweisen, wobei der zweite Druckteller größer ist als der erste Druckteller, und wobei der mit dem Luftbehälter verbundene Eingang des Druckumsetzers zu dem zweiten Druckteller führt, so dass das Öffnen der Zuführung durch die Öffnungseinrichtung zu einer kontinuierlichen Erhöhung des Bremsdrucks führt. Der durch den größeren zweiten Druckteller hervorgerufen, höhere Bremsdruck steigt also zunächst allmählich und kontinuierlich an und wirkt erst nach einer gewissen Verzögerungszeit in voller Höhe auf den Aktuator der Bremseinrichtung ein. Eine fortlaufende Zeitsteuerung über eine Druckeinstelleinrichtung oder eine sonstige Elektronik ist nicht erforderlich. Es genügt die herkömmliche Erzeugung des Triggersignals.

Gemäß einer zweiten vorteilhaften Weiterbildung kann die Öffnungseinrichtung eine Düse oder ein Linearventil zum Zuführen des Bremssteuerdrucks zu dem Druckumsetzer umfassen. Die Düse oder das Linearventil führen zu einem gewünschten zeitlich rampenförmigen Anstieg des Bremsdrucks.

Gemäß einer dritten vorteilhaften Weiterbildung kann die Öffnungseinrichtung ein über das Triggersignal gesteuertes Magnetventil umfassen. Durch das Magnetventil kann die kontrollierte Zuführung des Bremssteuerdrucks aus dem Luftbehälter in den Druckumsetzer zeitgenau im Ansprechen auf das Triggersignal gestartet werden.

Bei der gesteuerten Bremseinrichtung handelt es sich vorzugsweise um eine Notbremseinrichtung, so dass eine Notbremsung mit zweistufigem Bremsdruck zur Vermeidung einer Radblockierung und mit kontinuierlichem Anstieg des Bremsdrucks zwischen den beiden Bremsdruckstufen zur Vermeidung von Leistungsspitzen erreicht werden kann.

Im Rahmen dieser Beschreibung kann die Vorrichtung zur Steuerung der Notbremseinrichtung aus Software-Komponenten (z.B. Tiggersignalerzeugung, Parametererfassung, etc.) und Hardware-Komponenten implementiert sein. Sie kann eine oder mehrere Schnittstellen aufweisen, um geeignete Daten mit anderen Einrichtungen des Fahrzeugs austauschen zu können. Die Steuereinrichtung kann als ein oder mehrere Module und/oder Prozesse und/oder Objekte und/oder Threads implementiert sein.

Die Erfindung wird nachfolgend anhand von Ausführungsbeispielen unter Bezugnahme auf die beigefügten Zeichnungsfiguren näher erläutert. Es zeigen:
- Fig. 1: ein Diagramm mit einem schematischen zweistufigen Verlauf einer geschwindigkeitsabhängigen Bremskraft bei einer herkömmlichen Notbremseinrichtung;
- Fig. 2: ein schematisches Blockschaltbild einer Notbremseinrichtung gemäß einem ersten Ausführungsbeispiel;
- Fig. 3: ein Diagramm mit einem verbesserten rampenförmigen Verlauf der Bremskraft bei einer Notbremseinrichtung gemäß dem ersten Ausführungsbeispiel; und
- Fig. 4: ein Flussdiagramm eines Steuerverfahrens gemäß einem zweiten Ausführungsbeispiel.

Es folgt eine Beschreibung vorteilhafter Ausführungsbeispiele anhand einer beispielhaften Notbremseinrichtung für ein Schienenfahrzeug zur Bereitstellung eines Notbremssteuerdrucks für eine pneumatische Bremseinrichtung des Schienenfahrzeugs.

Fig. 2 zeigt schematisch eine Notbremseinrichtung mit einer Notbremsdruckeinstelleinrichtung (NBD) 22 und einer Notbremssteuerventileinrichtung (SVE) 24. Die Notbremssteuerventileinrichtung 24 kann mit einer nicht gezeigten Hauptluftleitung verbunden sein. Ferner ist die Notbremssteuerventileinrichtung 24 mit einem Einheitsdruckumsetzer (EDU) 26 verbunden, der einen anliegenden Steuerdruck wie bspw. einen Notbremssteuerdruck Cv in einen entsprechenden Bremsdruck C umsetzt, der zumindest einem Bremsaktuator der pneumatischen Bremseinrichtung (z.B. einer Reibungsbremse) zugeführt wird. Es sei angemerkt, dass statt des Einheitsdruckumsetzers 26 auch ein Druckverstärker verwendet werden kann, welcher den angelegten Steuerdruck Cv nicht nur auf ein größeres Volumen überträgt, sondern auch erhöht.

Im Falle einer Notbremsung wird die Notbremseinrichtung betätigt oder in sonstiger Weise aktiviert, so dass gegebenenfalls eine für normale Bremsvorgänge verwendete Hauptsteuerventileinrichtung (nicht gezeigt) umgangen wird.

Die Notbremssteuerventileinrichtung 24 kann bspw. durch einen Druckabfall in einer Hauptluftleitung des Schienenfahrzeugs angesteuert werden, um eine Notbremsung einzuleiten. Entsprechend stellt die Notbremssteuerventileinrichtung 24 den Notbremssteuerdruck Cv bereit, der an den Einheitsdruckumsetzer 26 weitergeleitet wird. Dieser Notbremssteuerdruck Cv wird durch einen von der Notbremsdruckeinstelleinrichtung 22 bereitgestellten pneumatischen Laststeuerdruck modifiziert. Dazu wird ein pneumatisches Lastdrucksignal an die Notbremssteuerventileinrichtung 24 angelegt. Durch geeignete pneumatische Komponenten stellt die Notbremssteuerventileinrichtung 24 den von ihr ausgegeben Steuerdruck gemäß dem modifizierten Lastdrucksignal ein.

Die Notbremsdruckeinstelleinrichtung 22 kann bspw. derart ausgebildet sein, dass sie ein pneumatisches Lastdrucksignal empfängt, welches einen Lastwert des Schienenfahrzeugs bzw. einer zugeordneten Achse des Schienenfahrzeugs angibt. Dieses Signal kann beispielsweise von einem Luftbalg stammen. Ferner wird der Notbremsdruckeinstelleinrichtung 22 ein von einem Geschwindigkeitssensor (S) 21 erzeugtes Geschwindigkeitssignal zugeführt. Dieses Signal kann ein elektrisches oder pneumatisches Signal sein. Die Notbremsdruckeinstelleinrichtung 22 ist derart ausgebildet, dass sie basierend auf dem Geschwindigkeitssignal ein Triggersignal Tr zum Umschalten des Notbremsdrucks C erzeugt und abgibt. Im Einzelnen erzeugt die Notbremsdruckeinstelleinrichtung 22 das Triggersignal Tr, wenn das Geschwindigkeitssignal das Erreichen einer vorbestimmten Geschwindigkeit des Schienenfahrzeugs anzeigt.

Wie eingangs unter Bezugnahme auf Fig. 1 erläutert, soll der Bremsdruck bei Unterschreiten der vorbestimmten Geschwindigkeit auf die höhere Stufe umgeschaltet werden. Im vorliegenden ersten Ausführungsbeispiel erfolgt die Druckübersetzung in dem Einheitsdruckumsetzer 26 unter Verwendung zweier verschieden großer Druckteller (auch "Cv-Teller" genannt), deren Druckkammern über verschiedene Eingänge Cv1 und Cv2 des Einheitsdruckumsetzers 26 mit dem Notbremssteuerdruck Cv beaufschlagt werden können. Über einen Wiegebalken (nicht gezeigt) kann zusätzlich eine lastabhängige Umstellung in Abhängigkeit des vorgenannten Lastwerts erfolgen. Gemäß dem vorliegenden Ausführungsbeispiel wird bei einer Notbremsung zuerst die Cv1-Kammer des Einheitsdruckumsetzers 26 mit dem Steuerdruck Cv beaufschlagt, welche wegen der kleineren Drucktellergröße eine geringere Kraft ausübt und somit den kleineren Bremsdruck C erzeugt. Bei der zweiten Notbremsstufe ab Unterschreiten der Geschwindigkeitsgrenze erfolgt die Abbremsung mit erhöhten Bremsdruck C durch Beaufschlagung der Cv2-Kammer mit dem Steuerdruck über den zweiten Eingang Cv2. Der Druckteller der Cv2-Kammer hat eine größere Fläche und die Differenzkraft addiert sich zu der Gesamtkraft, was einen höheren Bremsdruck C zur Folge hat.

Erfindungsgemäß wird der zweite Eingang Cv2 des Einheitsdruckumsetzers 26 aber nicht direkt mit dem Steuerdruck Cv aus der Notbremssteuerventileinrichtung 24 beaufschlagt, sondern über einen Luftbehälter (LB) 28 oder eine zusätzliche Druckkammer, wobei der Druckluftinhalt dann über eine steuerbare Öffnungseinrichtung 29 der Cv2-Kammer des Einheitsdruckumsetzers 26 im Ansprechen auf das Triggersignal Tr zugeführt wird. Durch diese mit geringem technischem Aufwand in herkömmlichen Systemen integrierbare Maßnahme wird erreicht, dass der Anstieg des Bremsdrucks nicht sprungartig bzw. stufenförmig erfolgt, sondern zeitkontinuierlich (bspw. in Form einer Rampe). Dadurch werden Leistungsspitzen reduziert und der Verschleiß von Reibungsbremsen gesenkt.

Der Zeitpunkt der Umschaltung kann auch in Abhängigkeit eines anderen Umschaltparameters, als der Geschwindigkeit, erfolgen (z.B. Zeitdauer, Rad-Schiene-Schupf, Wegstrecke, etc.).

Die Zeitdauer des kontinuierlichen Anstiegs bis zum Erreichen des maximalen Notbremssteuerdrucks in der Cv2-Kammer ist u.a. vom Volumen des Luftbehälters 28 und der Durchlassöffnung der Öffnungseinrichtung abhängig, so dass das Erreichen des maximalen Bremsdrucks bei der Notbremsung letztlich nicht geschwindigkeitsabhängig sondern zeitgesteuert erfolgt. Lediglich das Starten des kontinuierlichen Druckanstiegs erfolgt im Ansprechen auf das Erfassen des vorbestimmten Geschwindigkeitswerts. Durch die kontinuierliche Erhöhung des Bremsdrucks bei gleichzeitiger Verringerung der Geschwindigkeit des Schienenfahrzeugs ergibt sich natürlich auch ein kontinuierlicher Bremskraftanstieg über der Geschwindigkeit. Somit ist eine kontinuierliche Regelung des Notbremssteuerdrucks Cv durch die Notbremsdruckeinstelleinrichtung 22 oder eine andere Elektronik basierend auf der Geschwindigkeit oder einem anderen Umschaltparameter, und ein damit verbundener hoher technischer Modifikationsaufwand nicht erforderlich.

Um die eingangs erwähnten nachteiligen Leistungsspitzen zu vermeiden, wird also die Zuführung des Steuerdrucks zu dem Einheitsdruckumsetzer 26 so modifiziert, dass der Druckanstieg nicht sprungförmig erfolgt. Auf den größeren Druckteller der Cv2-Kammer soll ein kontinuierlich ansteigender Steuerdruck wirken. Hierfür kann die gesteuerte Öffnungseinrichtung 29 eine Düse oder ein Linearventil aufweisen, mittels denen die Cv2-Kammer des Einheitsdruckumsetzers 26 kontinuierlich aus dem Luftbehälter 28 befüllt wird. Die Befüllung kann über ein zusätzliches Magnetventil (nicht gezeigt) gestartet werden, welches über das Triggersignal Tr gesteuert wird.

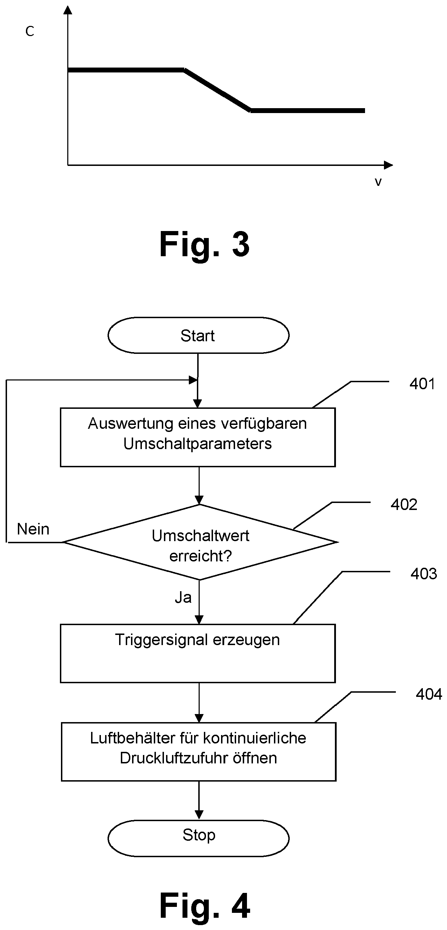

Fig. 3 zeigt ein Diagramm mit einem schematischen Verlauf eines rampenförmig ansteigenden Bremsdrucks (C) für eine pneumatische Bremseinrichtung über der Geschwindigkeit (v) des Schienenfahrzeugs bei einer Notbremseinrichtung gemäß dem vorstehend beschriebenen ersten Ausführungsbeispiel.

Beim Auslösen der Notbremse erfolgt zunächst die direkte Zuführung des Bremssteuerdrucks Cv zu der Cv1-Kammer des Einheitsdruckumsetzers 26, was zur ersten (niedrigeren) Stufe des Bremsdrucks C führt. Basierend auf den über die Sensoreinrichtung gewonnenen Geschwindigkeitsdaten erfolgt nun bei Erreichen der vorbestimmten Geschwindigkeit das Erzeugen des Triggersignals Tr, worauf die über den Luftbehälter 28 und die Öffnungseinrichtung 29 gesteuerte und kontinuierlich steigende Druckanhebung erfolgt, bis der maximale Bremsdruck erreicht ist.

Fig. 4 zeigt ein Flussdiagramm eines Steuerverfahrens für eine Notbremseinrichtung gemäß einem zweiten Ausführungsbeispiel, das beispielsweise in einer Notbremssteuereinrichtung als Software zur Computersteuerung implementiert werden kann.

Der Programmstart wird bspw. beim Auslösen einer Notbremsung eingeleitet. Im Schritt 401 erfolgt die Auswertung eines Umschaltparameters (z.B. Geschwindigkeitsdaten eines verfügbaren Geschwindigkeitssignals v) ggf. unter Hinzuziehung verfügbarer Lastdaten T zur Prognostizierung des Verzögerungsverhaltens des betreffenden Schienenfahrzeugs bspw. anhand einer Speichertabelle oder eines Algorithmus. Ausgehend vom prognostizierten Verzögerungsverhalten wird dann ein Umschaltwert (z.B. eine Umschaltgeschwindigkeit) für den Beginn einer kontinuierlichen (z.B. rampenförmigen) Änderung des Notbremsdrucks ermittelt. Alternativ kann auch ein Umschaltbereich ermittelt werden, innerhalb dem die Umschaltung stattfinden soll. Danach wird im Schritt 402 durch Vergleich mit dem aktuellen Geschwindigkeitswert geprüft, ob die ermittelte Umschaltwert oder Umschaltbereich erreicht wurde oder nicht. Falls nicht, werden die Schritte 401 und 402 solange wiederholt, bis der ermittelte Umschaltwert bzw. Umschaltbereich erreicht wurde. Sobald im Schritt 402 festgestellt wird, dass der ermittelte Umschaltwert bzw. Umschaltbereich erreicht wurde, schreitet der Ablauf zum Schritt 403 und ein Triggersignal für die Öffnung einer ergänzenden Druckluftzufuhr aus einem Luftbehälter wird erzeugt. Schließlich wird die ergänzende Druckluftzufuhr aus dem Luftbehälter zu dem Einheitsdruckumsetzer im Schritt 404 im Ansprechen auf das Triggersignal geöffnet.

Zumindest die Steuerung für die Einleitung der kontinuierlichen Erhöhung des Bremsdrucks bei der Notbremsung kann somit durch eine in der Notbremseinrichtung vorgesehene programmgesteuerte Computereinrichtung realisiert sein, bei der die Schritte der Fig. 4 mittels eines Computerprogramms gesteuert werden, das beispielsweise auf einem computerlesbaren Speichermedium gespeichert ist oder über ein Netzwerk wie beispielsweise das Internet oder ein lokales Netz herunterladbar ist.

In den vorstehend beschriebenen Ausführungsbeispielen kann die beschriebene Bremssteuervorrichtung auch eine elektronische Gleitschutzsteuereinrichtung oder einen Gleitschutzrechner aufweisen. Der Gleitschutzrechner kann mit einem oder mehreren Ablassventilen zum Bereitstellen einer Gleitschutzfunktion verbunden sein. Dazu sind die Ablassventile im Druckluftkreis hinter dem Einheitsdruckumsetzer 26 angeordnet, der den Bremsdruck für nicht gezeigte pneumatische Aktuatoren bereitstellt. Durch die Ablassventile kann der an bestimmten Aktuatoren anliegende Bremsdruck nach Maßgabe des Gleitschutzrechners verringert werden.

Der Gleitschutzrechner kann beispielsweise aus Daten von Radgeschwindigkeitssensoren die Fahrzeuggeschwindigkeit v ermitteln. Dabei können dann Geschwindigkeitsdaten vom Gleitschutzrechner an die Notbremsdruckeinstelleinrichtung 22 übermittelt werden, die diese Informationen empfängt und für die Prognose des Umschaltwerts für den kontinuierlichen Anstieg des Steuerdrucks Cv auswertet. Somit kann die Notbremsdruckeinstelleinrichtung 22 bereits vorhandene Daten v, T verwenden. Es versteht sich, dass die Notbremsdruckeinstelleinrichtung 22 auf geeignete Art auch mit anderen Sensoren und/oder Steuereinrichtungen verbunden sein kann, um das zur Ansteuerung der Notbremssteuerventileinrichtung 24 verwendete Lastdrucksignal bzw. den Umschaltwert zu prognostizieren. Darüber hinaus kann die Notbremsdruckeinstelleinrichtung 22 auch dazu ausgebildet sein, bei Ausfall der Übermittlung von Geschwindigkeitsdaten v und/oder Lastwertdaten T einen vordefinierten Umschaltwert für einen Rückfall-Notbremsdruckverlauf anzusteuern.

Es sei angemerkt, dass die vorgeschlagene kontinuierliche Änderung des Bremsdruckverlaufs nicht zwingend bei einer Erhöhung des Bremsdrucks und auch nicht zwingend bei einer Notbremsung eingesetzt werden muss.

Zusammenfassend wurden eine Vorrichtung und ein Verfahren zur Steuerung einer Bremseinrichtung, vorzugsweise einer Notbremseinrichtung, eines Schienenfahrzeugs beschrieben, wobei zumindest ein Umschaltparameter für eine Änderung eines durch einen Druckumsetzer erzeugten Bremsdrucks der Bremseinrichtung erfasst und ein Triggersignal im Ansprechen auf einen ermittelten vorbestimmten Wert des Umschaltparameters erzeugt wird. Ein Bremssteuerdruck für den Druckumsetzer wird in einen Luftbehälter eingeleitet und eine Zuführung des Bremssteuerdrucks aus dem Luftbehälter zu dem Druckumsetzer wird im Ansprechen auf das Triggersignal geöffnet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung zur Steuerung einer Bremseinrichtung eines Schienenfahrzeugs, mit:
- einem Druckumsetzer (26) zum Erzeugen eines Bremsdrucks zum Betätigen zumindest eines Bremsaktuators der Bremseinrichtung,
- einer Sensoreinrichtung (21) zum Erfassen zumindest eines Umschaltparameters für eine Änderung des Bremsdrucks der Bremseinrichtung,
- einer Triggereinrichtung (22) zum Erzeugen eines Triggersignals im Ansprechen auf einen durch die Sensoreinrichtung (21) ermittelten vorbestimmten Wert des Umschaltparameters,
**gekennzeichnet, durch**
- einen Luftbehälter (28), dem ein Bremssteuerdruck für den Druckumsetzer (26) zuführbar ist, und
- eine Öffnungseinrichtung (29) zum Öffnen einer Zuführung des Bremssteuerdrucks aus dem Luftbehälter (28) zu dem Druckumsetzer (26) im Ansprechen auf das Triggersignal.

2. Vorrichtung nach Anspruch 1, wobei die Sensoreinrichtung einen Geschwindigkeitssensor (21) zum Erfassen der Geschwindigkeit des Schienenfahrzeugs umfasst und wobei der Eingang des Druckumsetzers (26) ein Eingang zur Erhöhung des Bremsdrucks ist.

3. Vorrichtung nach Anspruch 2, wobei der Druckumsetzer (26) einen ersten Druckteller und einen zweiten Druckteller aufweist, wobei der zweite Druckteller größer ist als der erste Druckteller, und wobei der mit dem Luftbehälter (28) verbundene Eingang des Druckumsetzers zu dem zweiten Druckteller führt, so dass das Öffnen der Zuführung durch die Öffnungseinrichtung (29) zu einer kontinuierlichen Erhöhung des Bremsdrucks führt.

4. Vorrichtung nach einem der vorgenannten Ansprüche, wobei die Öffnungseinrichtung eine Düse oder ein Linearventil zum Zuführen des Bremssteuerdrucks zu dem Druckumsetzer (26) umfasst.

5. Vorrichtung nach einem der vorgenannten Ansprüche, wobei die Öffnungseinrichtung (29) ein über das Triggersignal gesteuertes Magnetventil umfasst.

6. Vorrichtung nach einem der vorgenannten Ansprüche, wobei die Bremseinrichtung eine Notbremseinrichtung ist.

7. Bremsanlage für ein Schienenfahrzeug, mit einer Vorrichtung nach einem der Ansprüche 1 bis 6.

8. Notbremseinrichtung für ein Schienenfahrzeug, mit einer Vorrichtung nach einem der Ansprüche 1 bis 5.

9. Verfahren zur Steuerung einer Bremseinrichtung eines Schienenfahrzeugs, mit den Schritten:
- Erfassen zumindest eines Umschaltparameters für eine Änderung eines durch einen Druckumsetzer (26) erzeugten Bremsdrucks der Bremseinrichtung,
- Erzeugen eines Triggersignals im Ansprechen auf einen ermittelten vorbestimmten Wert des Umschaltparameters, **gekennzeichnet durch**:
- Einleiten eines Bremssteuerdrucks für den Druckumsetzer (26) in einen Luftbehälter (28), und
- Öffnen einer Zuführung des Bremssteuerdrucks aus dem Luftbehälter (28) zu dem Druckumsetzer (26) im Ansprechen auf das Triggersignal.

10. Verfahren nach Anspruch 9, wobei der Schritt des Öffnens der Zuführung aus dem Luftbehälter so ausgestaltet ist, dass er zu einem rampenförmigen Anstieg des Bremsdrucks führt.

11. Verfahren nach Anspruch 9 oder 10, wobei der Bremsvorgang eine Notbremsung ist.

12. Computerprogramm mit Codemitteln zum Generieren der Schritte gemäß einem der Patentansprüche 9 bis 11 bei dessen Ausführung in einem Computersystem.

## Claims

1. Device for controlling a brake apparatus of a rail vehicle, having:
- a pressure converter (26) for generating a brake pressure for activating at least one brake actuator of the brake apparatus,
- a sensor apparatus (21) for acquiring at least one switching parameter for changing the brake pressure of the brake apparatus,
- a trigger apparatus (22) for generating a trigger signal in response to a predetermined value of the switching parameter which has been obtained by the sensor apparatus (21),
**characterised by**
- an air vessel (28) to which a brake control pressure for the pressure converter (26) can be supplied, and
- an opening apparatus (29) for opening a supply of the brake control pressure from the air vessel (28) to the pressure converter (26) in response to the trigger signal.

2. Device according to claim 1, wherein the sensor apparatus comprises a velocity sensor (21) for acquiring the velocity of the rail vehicle, and wherein the input of the pressure converter (26) is an input for increasing the brake pressure.

3. Device according to claim 2, wherein the pressure converter (26) has a first pressure plate and a second pressure plate, wherein the second pressure plate is larger than the first pressure plate, and wherein the input of the pressure converter which is connected to the air vessel (28) leads to the second pressure plate, with the result that the opening of the supply by the opening apparatus (29) gives rise to a continuous increase in the brake pressure.

4. Device according to any of the preceding claims, wherein the opening apparatus comprises a nozzle or a linear valve for supplying the brake control pressure to the pressure converter (26).

5. Device according to any of the preceding claims, wherein the opening apparatus (29) comprises a solenoid valve which is controlled by means of the trigger signal.

6. Device according to any of the preceding claims, wherein the brake apparatus is an emergency brake apparatus.

7. Brake system for a rail vehicle, having a device according to any of claims 1 to 6.

8. Emergency brake apparatus for a rail vehicle, having a device according to any of claims 1 to 5.

9. Method for controlling a brake apparatus of a rail vehicle, comprising the steps of:
- acquiring at least one switching parameter for changing a brake pressure of the brake apparatus which is generated by a pressure converter (26),
- generating a trigger signal in response to a predetermined value of the switching parameter, which has been obtained,
- applying a brake control pressure for the pressure converter (26) to an air vessel (28), and
- opening a supply of the brake control pressure from the air vessel (28) to the pressure converter (26) in response to the trigger signal.

10. Method according to claim 9, wherein the step of opening the supply from the air vessel is configured in such a way that it gives rise to a ramp-shaped increase in the brake pressure.

11. Method according to claim 9 or 10, wherein the braking process is an emergency braking operation.

12. Computer programme having code means for generating the steps according to any of patent claims 9 to 11 during the execution thereof in a computer system.

## Revendications

1. Système de commande d'un dispositif de frein d'un véhicule ferroviaire, comprenant :
- un convertisseur (26) de pression pour produire une pression de frein, afin d'actionner au moins un actionneur de frein du dispositif de frein,
- un dispositif (21) de capteur pour relever au moins un paramètre de commutation pour une variation de la pression de frein du dispositif de frein,
- un dispositif (22) de déclenchement pour produire un signal de déclenchement en réaction à une valeur, déterminée à l'avance et déterminée par le dispositif (21) de capteur, du paramètre de commutation,
**caractérisé par**
- un réservoir (28) à air auquel une pression de commande de frein pour le convertisseur (26) de frein peut être envoyé, et
- un dispositif (29) d'ouverture pour l'ouverture d'un envoi de la pression de commande de frein du réservoir (28) à air au convertisseur (26) de pression en réaction au signal de déclenchement.

2. Système suivant la revendication 1, dans lequel le dispositif de capteur comprend un capteur (21) de vitesse pour relever la vitesse du véhicule ferroviaire et dans lequel l'entrée du convertisseur (26) de pression est une entrée pour élever la pression de frein.

3. Système suivant la revendication 2, dans lequel le convertisseur (26) de pression a un premier disque de pression et un deuxième disque de pression, le deuxième disque de pression étant plus grand que le premier disque de pression, et dans lequel l'entrée, reliée au réservoir (28) à air, du convertisseur de pression mène au deuxième disque de pression, de sorte que l'ouverture de l'envoi par le dispositif (29) d'ouverture provoque une élévation continue de la pression de frein.

4. Système suivant l'une des revendications précédentes, dans lequel le dispositif d'ouverture comprend une buse ou une soupape linéaire pour envoyer la pression de commande de frein au convertisseur (26) de pression.

5. Système suivant l'une des revendications précédentes, dans lequel le dispositif (29) d'ouverture comprend une électrovanne commandée par le signal de déclenchement.

6. Système suivant l'une des revendications précédentes, dans lequel le dispositif de frein est un dispositif de frein d'urgence.

7. Installation de frein d'un véhicule ferroviaire ayant un système suivant l'une des revendications 1 à 6.

8. Dispositif de frein d'urgence d'un véhicule ferroviaire ayant un système suivant l'une des revendications 1 à 5.

9. Procédé de commande d'un dispositif de frein d'un véhicule ferroviaire, comprenant les stades :
- on relève au moins un paramètre de commutation d'une variation d'une pression de frein, produite par un convertisseur (26) de pression, du dispositif de frein,
- on produit un signal de déclenchement en réaction à une valeur, déterminée à l'avance, du paramètre de commutation, **caractérisé en ce que**
- on envoie une pression de commande de frein pour le convertisseur (26) de pression à un réservoir (28) d'air, et
- on ouvre un envoi de la pression de commande de frein du réservoir (28) d'air au convertisseur (26) de pression en réaction au signal de déclenchement.

10. Procédé suivant la revendication 9, dans lequel le stade d'ouverture de l'envoi à partir du réservoir d'air est conformé de manière à provoquer une élévation en forme de rampe de la pression de frein.

11. Procédé suivant la revendication 9 ou 10, dans lequel l'opération de frein est un freinage d'urgence.

12. Programme d'ordinateur ayant des moyens de code pour produire les stades suivant l'une des revendications 9 à 11 lors de son exécution dans un système d'ordinateur.
